# EUROPÄISCHE PATENTSCHRIFT

(11) **EP 2 885 858 B1**
(45) Veröffentlichungstag und Bekanntmachung des Hinweises auf die Patenterteilung: **19.02.2020**
(21) Anmeldenummer: 13736549.0
(22) Anmeldetag: 10.07.2013
(51) Int. Cl.: H02K 17/16, H02K 17/20, H02K 15/00

(54) **KÄFIGROTOR FÜR EINE ELEKTRISCHE MASCHINE**
CAGE ROTOR FOR AN ELECTRIC MACHINE
ROTOR À CAGE D'ÉCUREUIL POUR MACHINE ÉLECTRIQUE

(30) Priorität: 20.08.2012 DE 102012214772
(43) Veröffentlichungstag der Anmeldung: 24.06.2015
(73) Patentinhaber: Robert Bosch GmbH, 70442 Stuttgart (DE)
(72) Erfinder: SCHNEIDER, Tobias, 70825 Korntal-Muenchingen (DE); NIPP, Eckart, 77830 Buehlertal (DE); ROGER, Julien, 70197 Stuttgart (DE); HEIDRICH, Markus, 71229 Leonberg (DE)
(86) Internationale Anmeldenummer: PCT/EP2013/064572
(87) Internationale Veröffentlichungsnummer: WO 2014/029554

(56) Entgegenhaltungen:
- CN-B- 101 557 149
- DE-A1- 19 737 163
- US-A- 5 952 764

## Beschreibung

### Gebiet der Erfindung

Die Erfindung betrifft einen Rotor für eine elektrische Maschine sowie eine derartige elektrische Maschine.

### Hintergrund der Erfindung

Elektrische Maschinen, wie etwa Drehstrom-Asynchronmaschinen, mit sogenannten Käfigläuferrotoren gehören zu den am weitest verbreiteten elektrischen Antrieben (z. B. Normmotoren).

In einem Gehäuse befindet sich in der Regel ein Stator mit einer Drehstromwicklung, in dem ein Rotor gelagert ist. Die Drehstromwicklung erzeugt bei entsprechender Bestromung ein Drehfeld, welches den Rotor in Bewegung versetzt. Der Rotor umfasst ein aus Blechen geschichtetes Blechpaket, in das Stäbe in Nuten eingebettet sind, die stirnseitig mit Kurzschlussringen miteinander verbunden sind. Stäbe und Kurzschlussringe bestehen in der Regel aus Aluminium, Kupfer bzw. speziellen Legierungen.

Als Fertigungsverfahren stehen neben vorgefertigten, stirnseitig mit den Kurzschlussringen verlöteten/verschweißten Stäben (beispielsweise für kleine Stückzahlen oder Bahnantriebe) Druckgussverfahren zur Verfügung. Der komplette Rotorkäfig, der die einzelnen Rotorstäbe und die beiden Kurzschlussringe umfasst, wird dabei in einem Druckgussprozess in das Rotorblechpaket eingegossen. Dieses Verfahren kommt insbesondere bei großen Stückzahlen zum Einsatz und steht sowohl für Aluminium- als auch Kupferdruckgussrotoren (bzw. Legierungen) zur Verfügung.

Beispielsweise zeigt die DE 10 2009 034 647 A1 ein Herstellungsverfahren für Käfigläufer. Die DE 197 37 163 A1 zeigt einen im Druckgussverfahren hergestellten Käfigläufer mit runden Übergang zwischen Rotorstäben und Kurzschlussringen durch Distanzscheiben mit sich vergrößernden Öffnungen für die Rotorstäbe. Druckgussrotoren können bei netzgespeisten Asynchronmotoren mit typischen Drehzahlen von 1500/min bzw. 3000/min eingesetzt werden. Kritisch ist die mechanische Festigkeit solcher Gussrotoren bei hohen Drehzahlen bzw. Umfangsgeschwindigkeiten, die z. B. mittels Umrichterspeisung erreicht werden.

Besonders am Übergang von den Rotorstäben zu den Kurzschlussringen kann sich durch den Gussprozess eine scharfe Kante ergeben, die an dieser Stelle unter Fliehkrafteinfluss eine deutliche Kerbwirkung entfaltet und damit die mechanische Festigkeit des Rotors herabsetzt. Nach dem Umgießen ist diese Stelle normalerweise nicht mehr zugänglich und somit nicht mehr bearbeitbar. Die Maximaldrehzahlen von Druckgussrotoren sind damit mechanisch begrenzt.

### Zusammenfassung der Erfindung

Es ist Aufgabe der Erfindung, den Einsatzbereich von elektrischen Maschinen mit Druckgussrotor zu erweitern.

Diese Aufgabe wird durch den Gegenstand des unabhängigen Anspruchs gelöst.

Weitere Ausführungsformen der Erfindung ergeben sich aus den abhängigen Ansprüchen und aus der folgenden Beschreibung.

Ein Aspekt der Erfindung betrifft einen Rotor für eine elektrische Maschine, beispielsweise einen elektrischen Motor oder einen elektrischen Generator.

Gemäß einer Ausführungsform der Erfindung umfasst der Rotor ein Blechpaket, das aus einer Mehrzahl von geschichteten Blechen gebildet ist, wobei die geschichteten Bleche überlappende Ausnehmungen aufweisen, die Öffnungen durch das Blechpaket bilden, eine Mehrzahl von Rotorstäben, die in den Öffnungen durch das Blechpaket verlaufen, und wenigstens einen Kurzschlussring an einem Ende des Blechpakets, der die Rotorstäbe elektrisch verbindet. Der Rotor kann als Käfigläufer angesehen werden.

Die Rotorstäbe und der Kurzschlussring sind an das Blechpaket angegossen. Wenigstens eine Öffnung durch das Blechpaket weist an einem Ende zumindest an einem Umfangsabschnitt einen zurückweichenden Rand auf.

Durch den zurückweichenden Rand am Ende der Öffnung entsteht beim Gießen ein Übergangsbereich zwischen dem Rotorstab, der in der Öffnung gebildet wird, und dem Kurzschlussring. Der Übergangsbereich weist einen etwas größeren Querschnitt auf als der Rotorstab in einem Innenbereich der Öffnung. Die scharfe Kante, die sonst zwischen dem Rotorstab und dem Kurzschlussring entstehen würde, wird durch den Übergangsbereich entschärft. Durch die Formung des Übergangs der Rotorstäbe zu den Kurzschlussringen wird die lokale Spannungsüberhöhung, die durch eine scharfe Kante entstehen würde, reduziert. Auf diese Weise kann der Rotor mit einer höheren Drehzahl betrieben werden.

Gemäß einer Ausführungsform der Erfindung ist der zurückweichende Rand gestuft. Der Rand kann eine oder mehrere Stufen umfassen, die ein Profil für den Übergangsbereich zwischen dem Rotorstab und dem Kurzschlussring bilden können.

Die mechanische Spannungsüberhöhung am Übergang der Rotorstäbe zu den Kurzschlussringen kann dadurch reduziert werden, dass innerhalb des Rotorblechpakets ein stufenförmiger Übergang von den Rotorstäben zu den Kurzschlussringen gebildet ist. Dieser kann einem Radius bzw. einer Fase sehr nahe kommen und vermindert die Kerbwirkung eines einzelnen scharfkantigen Übergangs. Laut FE-Berechnungen kann damit die mechanische Spannung signifikant reduziert werden.

Da die Rotorstäbe und der Kurzschlussring durch Gießen geformt werden, wird die Abstufung am Rand der Öffnungen bereits in der Gießform erzeugt. Der gewünschte stufenweise Übergang von Rotorstab zu Kurzschlussring mit der damit verbundenen reduzierten mechanischen Belastung entsteht ohne Nachbearbeitung.

Gemäß einer Ausführungsform der Erfindung ist eine Ausnehmung eines Endblechs aus der Mehrzahl von geschichteten Blechen an dem Umfangsabschnitt gegenüber einer Ausnehmung eines darunterliegenden Blechs vergrößert, so dass eine Stufe gebildet ist. Es ist zu verstehen, dass eine Ausnehmung in einem Blech eine ausgestanzte Öffnung oder eine Nute sein kann. Der gewünschte stufenweise Übergang vom Rotorstab auf den Kurzschlussring kann durch Verwendung spezieller Rotorendbleche realisiert werden. Die beispielsweise in die Endbleche gestanzten oder herausgelaserten Ausnehmungen können (insbesondere zur Rotorinnenseite hin) gegenüber den Ausnehmungen in den restlichen Blechen leicht vergrößert sein.

Gemäß einer Ausführungsform der Erfindung sind Ausnehmungen mehrere Endbleche an einem Ende des Blechpakets gegenüber einer Ausnehmung des jeweils darunterliegenden Blechs vergrößert. Die Abstufung kann nicht nur durch ein einzelnes sondern auch durch mehrere gestufte Endbleche realisiert werden.

Gemäß einer Ausführungsform der Erfindung befindet sich der Umfangsabschnitt mit dem zurückweichenden Rand radial innen an der Öffnung durch das Blechpaket, also in dem Bereich der Ausnehmung, der der Motorwelle am nächsten liegt. In diesem Bereich kann der Kurzschlussring über den Rand der Öffnung hinausreichen.

Gemäß einer Ausführungsform der Erfindung weisen die Ausnehmungen in den Blechen eine axial verlaufende Innenfläche auf. Die Ausnehmungen sind beispielsweise durch Ausstanzen oder Lasern erzeugt. Die Innenflächen der Ausnehmungen können also orthogonal zur Erstreckungsrichtung des jeweiligen Blechs verlaufen.

Gemäß einer Ausführungsform der Erfindung reicht der Kurzschlussring im Umfangsabschnitt mit dem zurückweichenden Rand über den zurückweichenden Rand hinaus. Dieser Umfangsabschnitt kann sich in dem Bereich der Ausnehmung befinden, die der Motorwelle am nächsten liegt.

Der Kurzschlussring kann in einem weiteren Umfangsabschnitt der Öffnung ohne zurückweichenden Rand eben, d. h. glatt in einen Rotorstab übergehen. Der weitere Umfangsabschnitt kann sich in einem Bereich der Ausnehmung befinden, die am weitesten von der Motorwelle entfernt ist.

Gemäß einer Ausführungsform der Erfindung sind die Rotorstäbe und die Kurzschlussringe aus Aluminium, Kupfer oder einer speziellen Legierung wie etwa einer Aluminiumlegierung oder einer Kupferlegierung, gegossen.

Ein weiterer Aspekt der Erfindung betrifft eine elektrische Maschine mit einem Rotor so wie der obenstehend und untenstehend beschrieben ist.

Damit kann beispielsweise eine Asynchronmaschine mit reduzierter mechanischer Belastung an den Kurzschlussringen umgesetzt werden, deren Drehzahlfestigkeit signifikant erhöht ist. Damit steigt die Leistungsdichte der elektrischen Maschine deutlich an.

Eine derartige Asynchronmaschine mit hohen Anforderungen an die Drehzahlfestigkeit kann beispielsweise in Elektrofahrzeugen, Hybridfahrzeugen oder in der Industrieantriebstechnik eingesetzt werden.

### Kurze Beschreibung der Figuren

Im Folgenden werden Ausführungsbeispiele der Erfindung mit Bezug auf die beiliegenden Figuren detailliert beschrieben.
Fig. 1 zeigt einen schematischen Längsschnitt durch eine elektrische Maschine gemäß einer Ausführungsform der Erfindung.
Fig. 2 zeigt einen Ausschnitt aus der Fig. 1 mit einem Rotor gemäß einer Ausführungsform der Erfindung.
Fig. 3 zeigt einen schematischen Längsschnitt durch einen Rotor gemäß einer weiteren Ausführungsform der Erfindung.
Fig. 4 zeigt eine schematische dreidimensionale Ansicht eines Blechpakets gemäß einer Ausführungsform der Erfindung.

Grundsätzlich sind identische oder ähnliche Teile mit den gleichen Bezugszeichen versehen.

### Detaillierte Beschreibung von Ausführungsbeispielen

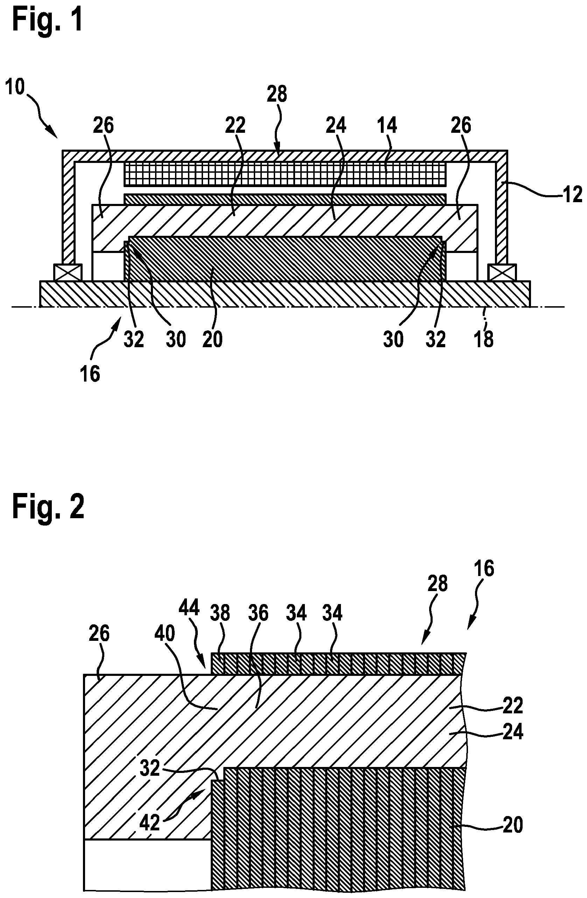

Fig. 1 zeigt eine elektrische Maschine 10, wie etwa einen Asynchronmotor 10, bei der in einem Gehäuse 12 ein Stator 14 angeordnet ist, in dem ein Rotor 16 drehbar um eine Motorwelle 18 gelagert ist. Es ist zu verstehen, dass die elektrische Maschine 10 im Wesentliche symmetrisch zu der Welle 18 aufgebaut ist, in der Fig.1 jedoch nur eine Hälfte der elektrische Maschine 10 dargestellt ist.

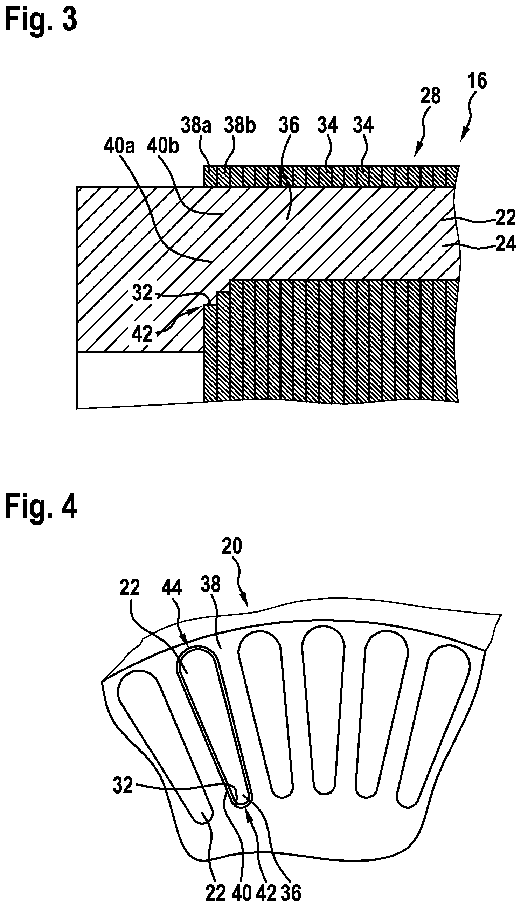

Der Rotor 16 umfasst ein Blechpaket 20, das von Öffnungen 22 in axialer Richtung bezüglich der Welle 18 durchdrungen ist. In den Öffnungen 22 sind Rotorstäbe 24 angeordnet, die an ihren Enden mit zwei Kurzschlussringen 26, die in Umfangsrichtung um die Motorwelle 18 verlaufen, elektrisch miteinander verbunden sind. In der Fig. 1 ist lediglich eine Öffnung 22 und ein Rotorstab 24 zu erkennen. Aus der Fig. 4 geht besser hervor, dass die Öffnungen 22 sowie die Rotorstäbe 24 die Welle 18 in Umfangsrichtung umgeben. Die Kurzschlussringe 26 und die Rotorstäbe 24 bilden dabei einen sogenannten Rotorkäfig.

Die Kurzschlussringe 26 und die Rotorstäbe 24 werden durch Gießen an den Rotor 16 bzw. an das Blechpaket 20 angeformt. Dazu wird das Blechpaket in eine Gießform gelegt, die die Außenform der Kurzschlussringe 26 definiert, und beispielsweise mit Aluminium, Kupfer oder einer speziellen Legierung ausgegossen. Das Gießmaterial füllt dabei die Öffnungen 22 komplett aus, so dass die Öffnungen 22 vollständig von den Rotorstäben 24 gefüllt werden.

In einem Bereich 28 im Inneren des Rotors 16 weisen die Öffnungen 22 und damit die Rotorstäbe 24 einen konstanten Querschnitt auf. Außerhalb des Blechpakets 20 erstrecken sich die Kurzschlussringe 26 in radialer Richtung weiter als die Rotorstäbe 24.

An den Endbereichen 30 der Öffnungen 22 bzw. in einem Übergangsbereich 30 zwischen den Rotorstäben 24 und den Kurzschlussringen 26 weisen die Rotorstäbe 24 nun einen gegenüber dem Innenbereich 28 vergrößerten Querschnitt auf, mit dem eine scharfe Kante zwischen den Rotorstäben 24 und den Kurzschlussringen 26 vermieden wird. Der Übergangsbereich 30 wird dadurch geschaffen, dass der der Welle 18 zugewandte Rand 32 der Öffnungen 22 gegenüber dem Innenbereich 28 zur Welle 18 hin zurückgesetzt ist.

Dieses Detail ist in der Fig. 2 genauer dargestellt. Das Blechpaket 20 umfasst eine Mehrzahl von Blechen 34, die in axialer Richtung aufeinander geschichtet sind. Jedes der Bleche 34 weist eine Ausnehmung 36 bzw. Nut 36 auf, die im Innenbereich 28 alle die gleiche Form aufweisen, um so den Bereich der Öffnung 22 mit gleichem Querschnitt zu bilden.

Ein Endblech 38, d. h. das äußerste Blech 38 am Ende des Blechpakets 20 weist eine gegenüber den Ausnehmungen 36 der Bleche 34 vergrößerte Ausnehmung 40 auf.

Die Ausnehmungen 36 und 40 sind in den Blechen 34, 38 durch Stanzen oder Lasern gebildet und können daher eine gegenüber der Außenflächen der Bleche 36, 40 orthogonal verlaufende Innenfläche aufweisen.

Dabei ist der radial innen liegende Umfangsabschnitt 42 der Ausnehmung 40 gegenüber der darunter liegenden Ausnehmung 36 zurückgesetzt. Der radial außen liegende Umfangsabschnitt 44 der Ausnehmung 40 stimmt jedoch mit der darunterliegenden Ausnehmung 36 überein. Im Bereich des Umfangsabschnitts 44 geht der Kurzschlussring 26 ohne Kante in axialer Richtung in den Rotorstab 24 über.

In der Fig. 2 ist ein gestufter Rand 32 der Öffnung 22 gezeigt, der mit lediglich einem Endblech 38 umgesetzt wurde.

Wie in der Fig. 3 gezeigt ist, sind jedoch mehr als ein erfindungsgemäßes Endblech, beispielsweise zwei, drei oder mehr Endbleche 38a, 38b möglich. Die Ausnehmung 40a des äußeren Endblechs ist dabei gegenüber einer Ausnehmung 40b des inneren Endblechs 38b vergrößert, die wiederum gegenüber der Ausnehmung 36 des darauf folgenden Blechs 36 im Innenbereich 28 vergrößert ist. Auf diese Weise wird ein Umfangsbereich 42 gebildet, der einen mehrfach gestuften Rand 32 aufweist.

Die Fig. 4 zeigt eine dreidimensionale Ansicht eines Blechpaketes 20, beispielsweise jenes aus den Fig. 1 und 2. Die Öffnungen 22 sind in radialer Richtung länger als in Umfangsrichtung und an den radialen Enden abgerundet, weisen also einen eiförmigen Querschnitt auf.

Auch in der Fig. 4 ist zu erkennen, dass der Rand 32 der Öffnungen 22 gegenüber einem Innenbereich 28 zurückgesetzt ist, indem das äußere Endblech 38 eine größere Ausnehmung 40 gegenüber den darunterliegenden Blechen 34 aufweist.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Rotor (16) für eine elektrische Maschine (10), der Rotor (16) umfassend:
ein Blechpaket (20), das aus einer Mehrzahl von geschichteten Blechen (34, 38) gebildet ist;
wobei die geschichteten Bleche (34, 38) überlappende Ausnehmungen aufweisen, die Öffnungen (22) durch das Blechpaket (20) bilden;
eine Mehrzahl von Rotorstäben (24), die in den Öffnungen (22) durch das Blechpaket (20) verlaufen;
wenigstens einen Kurzschlussring (26) an einem Ende des Blechpakets (20), der die Rotorstäbe (24) elektrisch verbindet;
wobei die Rotorstäbe (24) und der Kurzschlussring (26) an das Blechpaket (20) angegossen sind; wobei wenigstens eine Öffnung (22) durch das Blechpaket (20) an einem Ende zumindest an einem Umfangsabschnitt (42) einen zurückweichenden Rand (32) aufweist,
**dadurch gekennzeichnet, dass**
eine Ausnehmung (40) eines Endblechs (38) aus der Mehrzahl von geschichteten Blechen an dem Umfangsabschnitt (42) gegenüber einer Ausnehmung (36) eines darunterliegenden Blechs (34) vergrößert ist, so dass durch den zurückweichenden Rand (32) eine Stufe gebildet ist, oder dass Ausnehmungen (40a, 40b) mehrerer Endbleche (38a, 38b) gegenüber einer Ausnehmung (36) des jeweils darunterliegenden Blechs (34) stufenweise vergrößert sind.

2. Rotor (16) nach Anspruch 1,
wobei der zurückweichende Rand (32) gestuft ist.

3. Rotor (16) nach einem der vorhergehenden Ansprüche,
wobei sich der Umfangsabschnitt (42) mit dem zurückweichenden Rand (32) radial innen an der Öffnung (22) durch das Blechpaket befindet.

4. Rotor (16) nach einem der vorhergehenden Ansprüche,
wobei die Ausnehmungen (36, 40, 40a, 40b) in den Blechen eine axial verlaufende Innenfläche aufweisen.

5. Rotor (16) nach einem der vorhergehenden Ansprüche,
wobei der Kurzschlussring (26) im Umfangsabschnitt (42) mit dem zurückweichenden Rand (32) über den zurückweichenden Rand hinausreicht, und/oder
wobei der Kurzschlussring (26) in einem weiteren Umfangsabschnitt (44) der Öffnung (22) ohne zurückweichenden Rand eben in einen Rotorstab (24) übergeht.

6. Rotor (16) nach einem der vorhergehenden Ansprüche,
wobei die Rotorstäbe (24) und der Kurzschlussring (26) aus Aluminium, Kupfer oder einer Legierung gegossen sind.

7. Elektrische Maschine (10) mit einem Rotor (16) nach einem der Ansprüche 1 bis 6.

## Claims

1. Rotor (16) for an electrical machine (10), the rotor (16) comprising:
a laminated core (20) which is formed from a plurality of layered laminates (34, 38);
wherein the layered laminates (34, 38) have overlapping recesses which form openings (22) through the laminated core (20);
a plurality of rotor bars (24) which run in the openings (22) through the laminated core (20);
at least one short-circuiting ring (26) at one end of the laminated core (20), which short-circuiting ring electrically connects the rotor bars (24);
wherein the rotor bars (24) and the short-circuiting ring (26) are cast onto the laminated core (20); wherein at least one opening (22) through the laminated core (20) has a yielding edge (32) at least in a circumferential section (42) at one end,
**characterized in that**
a recess (40) of an end laminate (38) comprising the plurality of layered laminates is increased in size in the circumferential section (42) in relation to a recess (36) of a laminate (34) situated therebeneath, so that a step is formed by the yielding edge (32), or **in that** recesses (40a, 40b) of a plurality of end laminates (38a, 38b) are increased in size in steps in relation to a recess (36) of the laminate (34) respectively situated therebeneath.

2. Rotor (16) according to Claim 1,
wherein the yielding edge (32) is stepped.

3. Rotor (16) according to either of the preceding claims,
wherein the circumferential section (42) with the yielding edge (32) is located radially on the inside of the opening (22) through the laminated core.

4. Rotor (16) according to one of the preceding claims,
wherein the recesses (36, 40, 40a, 40b) in the laminates have an axially running inner surface.

5. Rotor (16) according to one of the preceding claims,
wherein the short-circuiting ring (26) extends beyond the yielding edge in the circumferential section (42) with the yielding edge (32), and/or
wherein the short-circuiting ring (26) merges with a rotor bar (24) in a further circumferential section (44) of the opening (22) without the yielding edge.

6. Rotor (16) according to one of the preceding claims,
wherein the rotor bars (24) and the short-circuiting ring (26) are cast from aluminium, copper or an alloy.

7. Electrical machine (10) comprising a rotor (16) according to one of Claims 1 to 6.

## Revendications

1. Rotor (16) pour une machine électrique (10), le rotor (16) comprenant :
un empilage de tôles (20) qui est composé d'une pluralité de tôles (34, 38) stratifiées ;
les tôles (34, 38) stratifiées possédant des cavités qui se chevauchent, lesquelles forment des ouvertures (22) à travers l'empilage de tôles (20) ;
une pluralité de barres de rotor (24) qui s'étendent dans les ouvertures (22) à travers l'empilage de tôles (20) ;
au moins une bague de court-circuit (26) à une extrémité de l'empilage de tôles (20), qui relie électriquement les barres de rotor (24) ;
les barres de rotor (24) et la bague de court-circuit (26) étant surmoulées contre l'empilage de tôles (20) ;
au moins une ouverture (22) à travers l'empilage de tôles (20) possédant à une extrémité un bord en retrait (32) au moins au niveau d'une portion périphérique (42) ;
**caractérisé en ce que**
une cavité (40) d'une tôle d'extrémité (38) parmi la pluralité de tôles stratifiées est agrandie au niveau de la portion périphérique (42) par rapport à une cavité (36) d'une tôle (34) qui se trouve au-dessous, de sorte qu'un gradin est formé par le bord en retrait (32), ou **en ce que** des cavités (40a, 40b) de plusieurs tôles d'extrémité (38a, 38b) sont agrandies graduellement par rapport à une cavité (36) de le tôle (34) qui se trouve respectivement au-dessous.

2. Rotor (16) selon la revendication 1, le bord en retrait (32) étant à gradins.

3. Rotor (16) selon l'une des revendications précédentes, la portion périphérique (42) avec le bord en retrait (32) se trouvant dans le sens radial à l'intérieur au niveau de l'ouverture (22) à travers l'empilage de tôle.

4. Rotor (16) selon l'une des revendications précédentes, les cavités (36, 40, 40a, 40b) dans les tôles possédant une surface intérieure qui suit un tracé axial.

5. Rotor (16) selon l'une des revendications précédentes,
la bague de court-circuit (26) dans la portion périphérique (42) avec le bord en retrait (32) s'étendant au-delà du bord en retrait et/ou
la bague de court-circuit (26) dans une portion périphérique supplémentaire (44) de l'ouverture (22) sans bord en retrait (24) à plat en une barre de rotor se prolonge.

6. Rotor (16) selon l'une des revendications précédentes, les barres de rotor (24) et la bague de court-circuit (26) étant moulées à partir d'aluminium, de cuivre ou d'un alliage.

7. Machine électrique (10) comprenant un rotor (16) selon l'une des revendications 1 à 6.
